# EUROPÄISCHE PATENTSCHRIFT

(11) **EP 4 011 544 B1**
(45) Veröffentlichungstag und Bekanntmachung des Hinweises auf die Patenterteilung: **21.05.2025**
(21) Anmeldenummer: 21211239.5
(22) Anmeldetag: 30.11.2021
(51) Int. Cl.: B23P 19/04, B23P 19/06, B23Q 3/155, B25J 9/00, B25J 9/16, B25J 11/00, B25J 15/00, B23P 19/00

(54) **SYSTEM UND VERFAHREN ZUM EINSETZEN ODER ENTNEHMEN VON ZERSPANUNGSEINSÄTZEN EINES ZERSPANUNGSWERKZEUGS**
SYSTEM AND METHOD FOR INSERTING OR REMOVING MACHINING INSERTS OF A MACHINING TOOL
SYSTÈME ET PROCÉDÉ D'INSERTION OU DE RETRAIT DES INSERTS D'USINAGE PAR ENLÈVEMENT DES COPEAUX D'UN OUTIL D'USINAGE PAR ENLÈVEMENT DES COPEAUX

(30) Priorität: 01.12.2020 DE 102020131839
(43) Veröffentlichungstag der Anmeldung: 15.06.2022
(73) Patentinhaber: Premium AEROTEC GmbH, 86179 Augsburg (DE)
(72) Erfinder: KIEFER, Lucas, 86179 Augsburg (DE); MÄUSLE, Christian, 86179 Augsburg (DE)
(74) Vertreter: LKGLOBAL Lorenz & Kopf Patentanwalt Attorney at Law PartG mbB

(56) Entgegenhaltungen:
- JP-A- H0 691 467
- JP-A- H03 196 928
- JP-A- H06 126 572
- JP-A- H06 179 141
- JP-A- S6 464 715
- JP-A- S61 146 444
- US-A1- 2016 297 013

## Beschreibung

### TECHNISCHES GEBIET

Die Erfindung betrifft ein System und ein Verfahren zum Einsetzen oder Entnehmen von Zerspanungseinsätzen von Werkzeugen.

### HINTERGRUND DER ERFINDUNG

Werkzeuge zur spanabhebenden Bearbeitung von Werkstücken weisen oftmals austauschbare Schneidplatten auf. Diese sind an einem Zerspanungswerkzeug angebracht und bilden dort Schneidkanten. Das Zerspanungswerkzeug kann starr, beispielsweise in Form eines Drehmeißels, oder bewegbar, insbesondere rotierbar, beispielsweise als Fräskopf, an einer Werkzeugmaschine angebracht werden. Solche Schneidplatten verschleißen bei der Bearbeitung und müssen regelmäßig getauscht werden. Je nach Größe des Zerspanungswerkzeugs und einer Taktung der Werkzeugmaschine kann es erforderlich sein, hierzu das Zerspanungswerkzeug aus der Werkzeugmaschine herauszunehmen und dann eine oder mehrere daran angeordnete Schneidplatten auszutauschen. Während des Austauschs könnte die Werkzeugmaschine ein anderes Zerspanungswerkzeug aufnehmen und zwischenzeitlich eine Bearbeitung fortsetzen.

Bei der Untersuchung von Schneidplatten wird eine Schneidplatte auf Verschleiß hin geprüft. Gegebenenfalls wird diese bei Überschreitung einer bestimmten Toleranz dann von dem Zerspanungswerkzeug entnommen und, beispielsweise bei Ausführung als Wendeschneidplatte, gewendet oder ausgetauscht. Beim Wenden wird ihre Ausrichtung geändert und eine alternative Schneidkante, die nicht verschlissen ist, wird in Schneidrichtung ausgerichtet. Sind alle Schneidkanten an der Schneidplatte verschlissen, wird eine neue Schneidplatte angebracht.

Ein solcher Prozess ist aufwendig und bei größeren Zerspanungswerkzeugen manuell nicht ergonomisch durchführbar. Eine automatisierte Handhabung von Zerspanungswerkzeugen zum Austausch ist praktisch kaum durchführbar, da Schneidplatten aufgrund ihrer Härte bruchempfindlich sind und aufgrund ihrer oftmals kleinen Größe nur schwer auszurichten und verkantungsfrei zu befestigen sind.

laut bei Espacenet verfügbaren Zusammenfassung ein Werkzeug, bei dem eine Referenzschneide und ein Referenzpositionierer an einem Fräswerkzeug angebracht werden, das auf einem Umrüsttisch angeordnet ist ; eine Schneidkantenspitze wird automatisch durch Verwendung einer Greifhand und eines Schraubers ausgetauscht. Die Stellungen der Greifhand und des Schraubers werden so kontrolliert, dass sie sicher abnehmbar angebracht werden können. Nachdem eine neue Schneidkantenspitze die gebrauchte ersetzt hat, wird die axiale Auslenkung der Schneidkante durch einen Schneidkantenauslenkumgsmessensor gemessen. Die Schneide, deren Ablenkung die Toleranz überschreitet, wird durch den Einsatz eines Schneidkanten-Positionierungsstoppers korrigiert.

JP H03 196928 A beschreibt laut der bei Espacenet verfügbaren Zusammenfassung ein Werkzeug, bei dem eine an seinem Zuführteil vorbereitete, gereinigte Spitze von einer Einführmaschine aufgenommen wird, und eine Spitzentasche wird an der Spitzenabnahmestelle indexiert, wo die Annäherung jedes anderen Elements durch Antrieb eines Tisches durchgeführt wird.

US 2016/297013 A1 beschreibt laut der bei Espacenet verfügbaren Zusammenfassung eine Vorrichtung zum Auswechseln von Bearbeitungseinsätzen an einem Werkzeug, bestehend aus einem Körper und einen Kopf, der mindestens einen Bearbeitungseinsatz trägt, wobei jede Platte daran gehalten ist.

### ZUSAMMENFASSUNG DER ERFINDUNG

Es ist folglich eine Aufgabe der Erfindung, ein System und ein Verfahren zum

Einsetzen oder Entnehmen von Zerspanungseinsätzen eines Zerspanungswerkzeugs vorzuschlagen, welche bevorzugt weitgehend automatisiert einen Austausch von Zerspanungseinsätzen ermöglichen.

Diese Aufgabe wird gelöst durch ein System mit den Merkmalen des unabhängigen Anspruchs 1 und durch ein Verfahren mit den Merkmalen des unabhängigen Anspruchs 9. Vorteilhafte Ausführungsformen und Weiterbildungen sind den Unteransprüchen und der nachfolgenden Beschreibung zu entnehmen.

Es wird ein System zum Einsetzen oder Entnehmen von Zerspanungseinsätzen eines Zerspanungswerkzeugs gemäß dem Anspruch 1 vorgeschlagen, aufweisend eine erste Verarbeitungsvorrichtung, eine zweite Verarbeitungsvorrichtung, und eine mit der ersten Verarbeitungsvorrichtung und der zweiten Verarbeitungsvorrichtung gekoppelte Steuerung, wobei die erste Verarbeitungsvorrichtung ein Greifelement zum Halten oder Sichern eines Zerspanungseinsatzes aufweist, wobei die zweite Verarbeitungsvorrichtung ein Befestigungswerkzeug zum Befestigen oder Lösen eines den Zerspanungseinsatz haltenden Befestigungsmittels aufweist, und wobei die Steuerung dazu ausgebildet ist, die erste Verarbeitungsvorrichtung zum Halten des Zerspanungseinsatzes anzusteuern, und die zweite Verarbeitungsvorrichtung bei gehaltenem Zerspanungseinsatz zum Befestigen oder Lösen des Befestigungsmittels anzusteuern.

Die erste Verarbeitungsvorrichtung und die zweite Verarbeitungsvorrichtung sind folglich beide mit der Steuerung gekoppelt und kooperieren bei dem Einsetzen und Entnehmen von Zerspanungseinsätzen eines Zerspanungswerkzeugs. Hierbei ist die erste Verarbeitungsvorrichtung dazu vorgesehen, einen Zerspanungseinsatz zu halten oder zu sichern, während die zweite Verarbeitungsvorrichtung den gehaltenen oder gesicherten Zerspanungseinsatz löst oder befestigt. Die erste Verarbeitungsvorrichtung kann demnach eine stets korrekte Ausrichtung des Zerspanungseinsatzes gewährleisten, sodass die zweite Verarbeitungsvorrichtung dessen Befestigung herstellt oder löst. Ein verkantungsfreies Einsetzen und Befestigen ist damit möglich. Die Gefahr einer Beschädigung beim Entnehmen des Zerspanungseinsatzes kann durch das Halten mittels der ersten Verarbeitungsvorrichtung ebenso deutlich reduziert werden.

In diesem Zusammenhang ist als Zerspanungseinsatz ein unmittelbar mit dem betreffenden Werkstück in Kontakt bringbares Element anzusehen, um das Werkstück zu bearbeiten. Es kann beispielsweise eine Schneidplatte, insbesondere eine Wendeschneidplatte sein. Dieser ist durch eine geeignete Halterung an dem Zerspanungswerkzeug befestigt.

In einer grundsätzlich möglichen Ausführungsform ist vorstellbar, dass die erste Verarbeitungsvorrichtung und die zweite Verarbeitungsvorrichtung in der Nähe der betreffenden Werkzeugmaschine angeordnet oder dazu in der Lage sind, diese bedarfsweise zu erreichen. Es kann indes vorgesehen sein, den Zerspanungseinsatz an einer anderen Stelle auszutauschen, die von der Werkzeugmaschine unabhängig ist. Es ist dazu denkbar, dass Zerspanungswerkzeugs von einer oder mehreren Werkzeugmaschinen auf eine Transportvorrichtung gebracht werden, um diese zu einem anderen Ort zu transportieren, an dem das Austauschen der Zerspanungseinsätze erfolgt. Das Zerspanungswerkzeug könnte dabei manuell und/oder teilautomatisiert und/oder vollständig automatisiert der Werkzeugmaschine entnommen und an die dafür vorgesehene Position transportiert werden.

Das Greifelement der ersten Verarbeitungsvorrichtung ist bevorzugt dazu ausgebildet, den Zerspanungseinsatz zu halten, sodass die zweite Verarbeitungsvorrichtung das Befestigungsmittel betätigen kann. Der Vorgang des Haltens ist dahingehend zu verstehen, dass die erste Verarbeitungsvorrichtung den Zerspanungseinsatz in einer vorgegebenen räumlichen Lage zu halten. Zudem kann die erste Verarbeitungsvorrichtung dazu ausgebildet sein, den Zerspanungseinsatz so zu platzieren, dass es eine für die Interaktion mit der zweiten Verarbeitungsvorrichtung vorgesehene Position und Ausrichtung einnehmen kann. Beim Befestigen des Befestigungsmittels könnte die erste Verarbeitungsvorrichtung dazu ausgebildet sein, kleinere, auf den Zerspanungseinsatz wirkende Kräfte beim Einsetzen des Befestigungsmittels in eine Bohrung oder ähnliches, zu kompensieren.

Zum Halten des Zerspanungseinsatzes ist das Greifelement vorgesehen, das mechanisch mit dem Zerspanungseinsatz koppelbar ist. Es sind viele verschiedene Ausführungen des Greifelements denkbar, die die Aufgabe erfüllen können. Beispielsweise sind einen Zwischenraum zueinander einschließende, bewegbare Glieder vorstellbar, die durch Bewegen der Glieder den Zerspanungseinsatz zwischen sich einschließen bzw. festklemmen können. Alternativ dazu können Elemente eingesetzt werden, die auf Fluidtechnik basieren, beispielsweise Saugnäpfe oder ähnliches.

Die zweite Verarbeitungsvorrichtung ist vorgesehen, um ein Befestigungsmittel zu betätigen. Dies kann eine Klemm- und/oder Schraubvorrichtung sein, die dazu ausgebildet ist, den Zerspanungseinsatz so an dem Zerspanungswerkzeug zu haltern, dass während des Betriebs der Werkzeugmaschine und der entsprechenden, auf den Zerspanungseinsatz wirkenden Lasten der Zerspanungseinsatz sicher an dem Zerspanungswerkzeug bleibt. Es kann weiterhin vorgesehen sein, dass die zweite Verarbeitungsvorrichtung dazu ausgebildet ist, bei der Befestigung des Befestigungsmittels aufgebrachte Kräfte oder Drehmomente zu messen und/oder zu begrenzen. Beispielsweise könnte die zweite Verarbeitungsvorrichtung eine Schraubendrehvorrichtung aufweisen, die dazu ausgebildet ist, das Befestigungsmittel mit einem einstellbaren Grenzdrehmoment zu verschrauben.

Die Steuerung ist dazu ausgebildet, die erste und zweite Verarbeitungsvorrichtung so anzusteuern, dass der Zerspanungseinsatz zunächst gehalten und anschließend gelöst oder befestigt wird. Befindet sich der Zerspanungseinsatz bereits an dem Zerspanungswerkzeug, kann die erste Verarbeitungsvorrichtung den Zerspanungseinsatz sichern, sodass der Zerspanungseinsatz nach dem Lösen des Befestigungsmittels an seiner Position bleibt. Soll der Zerspanungseinsatz an dem Zerspanungswerkzeug angebracht werden, ist er durch die erste Verarbeitungsvorrichtung so zu positionieren, dass die zweite Verarbeitungsvorrichtung den Zerspanungseinsatz durch das Befestigungsmittel reibungslos befestigen kann.

Insgesamt ergibt sich durch das erfindungsgemäße System eine vorteilhafte, automatisierte Einrichtung insbesondere zum Austauschen von Zerspanungseinsätzen von Zerspanungswerkzeugen. Die sich ergebenden Vorteile sind besonders beim Einsatz in Umgebungen mit einer größeren Anzahl von Werkzeugmaschinen immanent, da ein manueller Aufwand signifikant reduziert und gleichzeitig eine gleichbleibend hohe Präzision sicherstellbar ist.

In einer vorteilhaften Ausführungsform weist das System ferner eine separate Fixiervorrichtung zur Aufnahme eines Zerspanungswerkzeugs auf, an dem der Zerspanungseinsatz zum Gebrauch anbringbar ist, zum Einsetzen und Entnehmen des Zerspanungseinsatzes bei an der Fixiervorrichtung angeordnetem Zerspanungswerkzeug. Der Zerspanungswerkzeug kann dazu ausgebildet sein, mehrere Zerspanungseinsätze aufzunehmen, die etwa über eine Umfangsfläche des Zerspanungswerkzeugs verteilt werden. Das Zerspanungswerkzeug könnte zusammen mit den Zerspanungseinsätzen einen Fräser ausbilden, der an ein rotierendes Element einer Werkzeugmaschine angebracht wird, beispielsweise über eine Morsekegelpaarung. Die Fixiervorrichtung könnte beispielhaft eine Aufnahmeeinrichtung besitzen, die einer Aufnahmeeinrichtung einer solchen Werkzeugmaschine entspricht. Das Zerspanungswerkzeug kann dann zum Austausch der Zerspanungseinsätze lösbar an der Fixiervorrichtung angebracht werden, sodass dann die beiden Verarbeitungsvorrichtungen den Austausch an dem durch die Fixiervorrichtung ausgerichteten Zerspanungswerkzeug durchführen. Die erste und/oder die zweite Verarbeitungsvorrichtung könnte in einer Ausführungsform dazu ausgebildet sein, das Zerspanungswerkzeug aus der Werkzeugmaschine oder einer Transportvorrichtung zu entnehmen und in die Fixiervorrichtung einzusetzen. Die Fixiervorrichtung ist bevorzugt dazu ausgebildet, den Zerspanungseinsatz bzw. einen den Zerspanungseinsatz aufnehmenden Abschnitt des Zerspanungswerkzeugs durch Bewegen des Zerspanungswerkzeugs so zu positionieren, dass ein entsprechendes Befestigungsmittel aus einer bevorzugten Richtung, bspw. vertikal von unten oder von oben, gehandhabt werden kann. Weist ein Zerspanungswerkzeug mehrere Zerspanungseinsätze auf, kann die Fixiervorrichtung dazu ausgebildet sein, nacheinander die einzelnen Zerspanungseinsätze auszurichten bzw. zu präsentieren und die Verarbeitungsvorrichtungen einen Tausch durchführen lassen. Die Fixiervorrichtung ist weiterhin bevorzugt dazu ausgebildet, das Zerspanungswerkzeug zu arretieren, sodass bei der Nutzung der beiden Verarbeitungsvorrichtungen das Zerspanungswerkzeug an dem vorgesehenen Ort und in der vorgesehenen Ausrichtung verbleibt.

Weiterhin könnte die Fixiervorrichtung in einem Bereich angeordnet sein, der sich in einen Arbeitsbereich der ersten Verarbeitungsvorrichtung und der zweiten Verarbeitungsvorrichtung befindet. Damit sind beide Verarbeitungsvorrichtungen in der Lage, auf den Zerspanungseinsatz zuzugreifen, welches sich an dem Zerspanungswerkzeug in der Fixiervorrichtung befindet. Der Arbeitsbereich ist dabei als ein räumlich abgegrenzter Raum zu verstehen, in dem sich Teile der betreffenden Verarbeitungsvorrichtung bewegen können.

Wie vorangehend dargelegt kann das Greifelement einen Sauggreifer oder einen Klemmgreifer aufweisen. Der Sauggreifer kann insbesondere einen Saugnapf aufweisen, der über ein Ventil mit einer Unterdruckleitung koppelbar ist. Durch Öffnen des Ventils entsteht ein Unterdruck an dem Saugnapf, sodass bei auf oder an dem Zerspanungseinsatz befindlichem Saugnapf der Saugnapf den Zerspanungseinsatz hält. Ein Klemmgreifer kann mehrere, zueinander bewegbare Glieder aufweisen, mit denen der Zerspanungseinsatz festklemmbar ist.

Das System weist erfindungsgemäß eine Lagervorrichtung mit mehreren Aufnahmen zum temporären Lagern von Zerspanungseinsätzen auf, wobei die Lagervorrichtung dazu ausgebildet ist, Zerspanungseinsätze in die mindestens eine Aufnahme einzuführen und aus ihr zu entnehmen, wobei in jede Aufnahme jeweils ein Zerspanungseinsatz einbringbar ist. Die Lagervorrichtung kann in der Nähe der ersten Verarbeitungsvorrichtung platziert werden, um dieser das Herausnehmen aus oder Einbringen von Zerspanungseinsätzen in die Lagervorrichtung zu ermöglichen. Die Lagervorrichtung könnte manuell und/oder automatisch mit Zerspanungseinsätzen bestückt werden und erlaubt den automatisierten Austausch. Die Lagervorrichtung kann individuell auf die betreffenden Zerspanungseinsätze zugeschnitten werden, um eine beschädigungsfreie, sichere Lagerung zu gewährleisten.

Die Aufnahmen umfassen erfindungsgemäß jeweils eine Zentriervorrichtung, die komplementär zu dem Zerspanungseinsatz ausgeformt und dazu ausgebildet ist, den Zerspanungseinsatz in einer vorgegebenen Ausrichtung zu halten. Jeder Zerspanungseinsatz, der in die Aufnahme gebracht wird, kann dann die vorgegebene Ausrichtung erhalten. Wird der Zerspanungseinsatz aus der Aufnahme entnommen, ist die erste Verarbeitungsvorrichtung dadurch ohne vorherige Prüfung der Ausrichtung in der Lage, den Zerspanungseinsatz mit der vorgegebenen Ausrichtung an das Zerspanungswerkzeug zu führen. Durch die Ausrichtung an der Zentriervorrichtung kann demnach die Handhabung des Zerspanungseinsatzes und dessen korrekte Ausrichtung an dem Zerspanungswerkzeug verbessern. Es ist selbstverständlich möglich, eine Lagervorrichtung vorzusehen, die unterschiedliche Aufnahmen mit unterschiedlichen Zentriervorrichtungen für unterschiedliche Zerspanungseinsätze aufweisen. Weiterhin könnten auch mehrere Lagervorrichtungen gleichzeitig vorgesehen sein, die jeweils mindestens eine solche Aufnahme aufweisen. Die Steuerung kann dazu ausgebildet sein, Kenntnis über die unterschiedlichen Lagervorrichtungen und/oder Aufnahmen zu haben, oder dazu befähigt sein, deren Ausprägung zu erkennen, um die erste Verarbeitungsvorrichtung entsprechend ansteuern zu können. Die Zentriervorrichtung kann so ausgestaltet sein, dass sie durch Flächenkontakt mit dem Zerspanungseinsatz unter Ausnutzung der Schwerkraft zu einer selbstständigen Ausrichtung des Zerspanungseinsatzes führt. Damit könnte beispielsweise auch ein Wenden einer Wendeschneidplatte erfolgen, da die erste Verarbeitungsvorrichtung eine Wendeschneidplatte mit verschlissener Schneidkante in eine Aufnahme legen kann, sodass sich diese entsprechend ausrichtet, um diese dann erneut zu greifen. Dies gestattet unterschiedliche Zugangsrichtungen bzw. Ausrichtungen der Wendeschneidplatte an der ersten Verarbeitungsvorrichtung.

Alternativ zu einer vorangehend erwähnten passiven Zentriervorrichtung kann auch eine aktiv gesteuerte Wendevorrichtung verwendet werden.

Bevorzugt weist das Befestigungswerkzeug eine Schraubendrehvorrichtung auf. Diese kann zum Lösen oder Festziehen einer Schraube oder eines Bolzens als Befestigungsmittel verwendet werden. Bevorzugt weist die Schraubendrehvorrichtung einen Schaft mit einem Profil auf, welches mit einer Schraube oder dergleichen koppelbar ist, sodass ein Drehmoment von der Schraubendrehvorrichtung auf die Schraube übertragbar ist. Der Schaft könnte auf die Einbausituation des jeweiligen Zerspanungseinsatzes angepasst sein, sodass die Schraubendrehvorrichtung direkt an die betreffende Schraube bewegt werden kann, ohne dass umgebende Teile berührt werden. Es ist besonders vorteilhaft, wenn die zweite Verarbeitungsvorrichtung dazu ausgebildet ist, eine momentane Ausrichtung einer Schraube zum Eingreifen in das Profil durch optische Bilderfassung und anschließende Bildauswertung zu prüfen, um die Schraubendrehvorrichtung präzise zu positionieren. Die Schraubendrehvorrichtung kann eine Einrichtung zum Aufnehmen einer Schraube aufweisen, um die Schraube von außen an den Zerspanungseinsatz heranzuführen. Die Einrichtung könnte etwa einen Magneten aufweisen. Alternativ dazu wäre eine zusätzliche Greifvorrichtung oder eine Vakuumeinrichtung denkbar. Die Schraubendrehvorrichtung könnte mit einem Speicher zur Bereitstellung von Schrauben verbindbar sein, sodass zur Befestigung des Zerspanungseinsatzes eines Schraube aus dem Speicher entnommen und an den Zerspanungseinsatz geführt werden kann.

Weiterhin ist es besonders vorteilhaft, wenn mindestens eine der ersten Verarbeitungsvorrichtung und der zweiten Verarbeitungsvorrichtung ein Mehrachsroboter ist. Die Verarbeitungsvorrichtungen können dann eine sehr große Bandbreite an Bewegungen durchführen und dadurch an unterschiedliche Werkzeugmaschinen, Zerspanungswerkzeuge oder Fixiervorrichtungen angepasst werden. Die Verarbeitungsvorrichtungen sind dann besonders gut dafür geeignet, eine große Anzahl von Zerspanungseinsätzen an unterschiedlichen Zerspanungswerkzeugen flexibel auszutauschen, da sie aufgrund ihrer mehrachsigen Bewegbarkeit einen großen Arbeitsbereich aufweisen.

Mindestens eine der ersten Verarbeitungsvorrichtung und der zweiten Verarbeitungsvorrichtung könnte dazu ausgebildet sein, ein auswechselbares Handhabungswerkzeug zu tragen. Beispielsweise kann die erste Verarbeitungsvorrichtung dazu ausgebildet sein, unterschiedliche Greifelemente zu tragen. Die zweite Verarbeitungsvorrichtung könnte dazu ausgebildet sein, unterschiedliche Befestigungswerkzeuge aufzunehmen. Beide Verarbeitungsvorrichtungen könnten zudem dazu ausgebildet sein, die betreffenden Handhabungswerkzeuge selbstständig aus einer Reihe von Handhabungswerkzeugen aufzunehmen. Die Steuerung kann die Verarbeitungsvorrichtungen so ansteuern, dass sie ein für den vorgesehenen Vorgang geeignetes Handhabungswerkzeug aufnehmen.

Es ist besonders vorteilhaft, wenn die Steuerung dazu ausgebildet ist, beim Handhaben eines Zerspanungseinsatzes eine Kennung des Zerspanungswerkzeugs einzulesen und die mindestens eine der ersten und zweiten Verarbeitungsvorrichtung so anzusteuern, dass sie ein geeignetes Handhabungswerkzeug aufnehmen. Beispielsweise könnte jeder Zerspanungseinsatz und/oder jedes Zerspanungswerkzeug mit einem RFID-Tag oder einem Barcode ausgestattet sein, der eine Kennung auslesbar macht. Basierend hierauf kann die Steuerung feststellen, welche Art von Zerspanungswerkzeug vorliegt, welche Zerspanungseinsätze und welche Anzahl von Zerspanungseinsätzen sowie deren Anordnung an dem Zerspanungswerkzeug vorliegt. Die Steuerung kann dann die Auswahl des Handhabungswerkzeugs und die Positionierung des Zerspanungswerkzeugs zum Lösen oder Befestigen der Schrauben durchführen, indem die Steuerung die einzelnen Komponenten, d.h. die Verarbeitungsvorrichtungen und gegebenenfalls die Fixiervorrichtung, entsprechend ansteuert.

Die Erfindung betrifft ferner ein Verfahren zum Einsetzen oder Entnehmen von Zerspanungseinsätzen eines Zerspanungswerkzeugs gemäß dem Anspruch 9, aufweisend die Schritte des Positionierens eines Greifelements einer ersten Verarbeitungsvorrichtung an einem Zerspanungseinsatz, des Haltens des Zerspanungseinsatzes durch das Greifelement, des Positionierens eines Befestigungswerkzeugs einer zweiten Verarbeitungsvorrichtung an einem den Zerspanungseinsatz haltenden Befestigungsmittels, des Befestigens oder Lösens des Befestigungsmittels mittels des Befestigungswerkzeugs bei gehaltenem Zerspanungseinsatz, und des Loslassens des Zerspanungseinsatzes durch die erste Verarbeitungsvorrichtung.

In einer vorteilhaften Ausführungsform weist das Verfahren die Schritte des Entnehmens eines den Zerspanungseinsatz tragenden Zerspanungswerkzeugs von der Werkzeugmaschine, des Einbringens des Zerspanungswerkzeugs in eine Fixiervorrichtung, und nach dem Handhaben des Zerspanungseinsatzes bei in der Fixiervorrichtung angeordnetem Zerspanungswerkzeug des Entnehmens des Zerspanungswerkzeugs von der Fixiervorrichtung, und des Einsetzens des Zerspanungswerkzeugs in die Werkzeugmaschine.

Es ist vorteilhaft, wenn das Halten das Anlegen eines Unterdrucks an einen Sauggreifer oder das Bewegen von Gliedern eines Klemmgreifers zum Klemmen des Zerspanungseinsatzes umfasst.

Das Verfahren umfasst erfindungsgemäß ferner den Schritt des Einbringens des Zerspanungseinsatzes in eine Aufnahme einer Zentriervorrichtung einer Lagervorrichtung, wobei die Zentriervorrichtung komplementär zu dem Zerspanungseinsatz ausgeformt und dazu ausgebildet ist, den Zerspanungseinsatz in einer vorgegebenen Ausrichtung zu halten.

Zudem kann das Befestigen oder Lösen das Betätigen einer Schraubendrehvorrichtung an der zweiten Verarbeitungsvorrichtung umfassen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 bis 3 zeigen eine Übersicht über ein System zum Einsetzen oder Entnehmen von Zerspanungseinsätzen in einer dreidimensionalen Darstellung in verschiedenen Zuständen.
Fig. 4 zeigt eine Lagervorrichtung mit Aufnahmen zum Aufnehmen von Zerspanungseinsätzen.
Fig. 5a und 5b zeigen eine Schraubendrehvorrichtung an einem Zerspanungseinsatz.
Fig. 6 und 7 zeigen jeweils ein Verfahren zum Einsetzen oder Entnehmen von Zerspanungseinsätzen eines Zerspanungswerkzeugs in einer blockbasierten Darstellung.

### DETAILLIERTE DARSTELLUNG EXEMPLARISCHER AUSFÜHRUNGSFORMEN

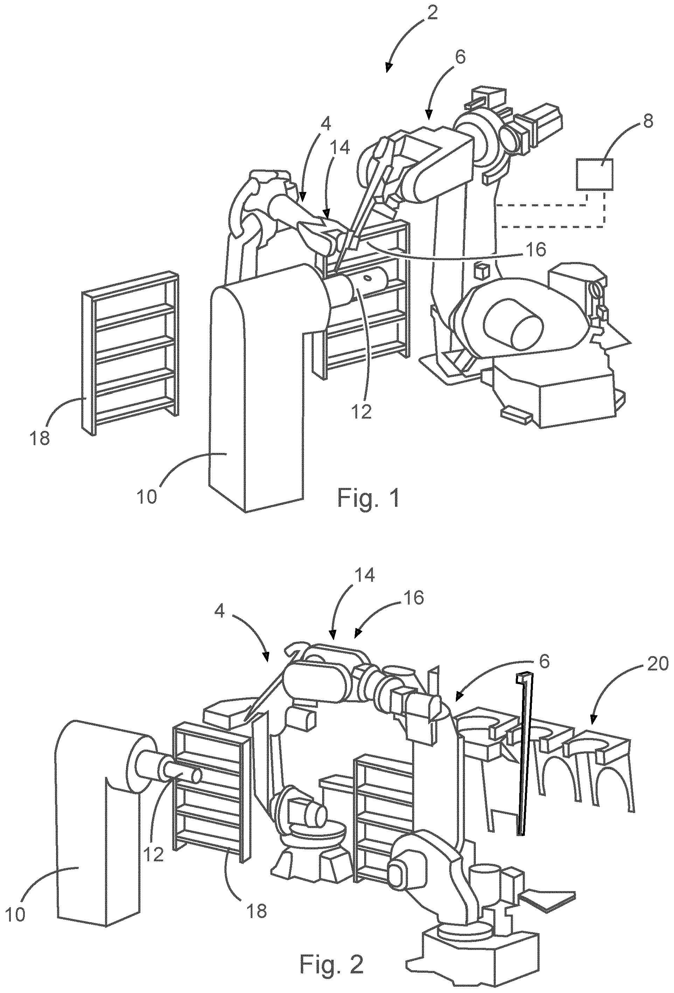

Fig. 1 zeigt ein System 2 zum Einsetzen und Entnehmen von Zerspanungseinsätzen eines Zerspanungswerkzeugs. Das System 2 weist eine erste Verarbeitungsvorrichtung 4 und eine zweite Verarbeitungsvorrichtung 6 auf. Die Verarbeitungsvorrichtungen 4 und 6 sind als Mehrachsroboter ausgeführt und mit einer Steuerung 8 gekoppelt, die als Mikrocontroller, Computer oder ähnliches realisiert sein kann. Die Steuerung 8 könnte statt in Form einer separaten Vorrichtung auch in der betreffenden Verarbeitungsvorrichtung 4 oder 6 selbst integriert sein. Weiterhin ist in Fig. 1 eine Fixiervorrichtung 10 gezeigt, in der ein Zerspanungswerkzeug 12, das einen oder mehrere Zerspanungseinsätze halten kann, fixierbar und ausrichtbar ist. Durch Anordnen des Zerspanungswerkzeugs 12 an der Fixiervorrichtung 10 wird eine von einer Werkzeugmaschine getrennte Handhabung des Zerspanungseinsatzes ermöglicht. Die Fixiervorrichtung 10 ist dazu ausgebildet, gezielt das Zerspanungswerkzeug 12 so auszurichten, dass Zerspanungseinsätze daran angebracht oder davon entnommen werden können.

Die erste Verarbeitungsvorrichtung 4 weist ein Greifelement 14 zum Halten oder Sichern eines Zerspanungseinsatzes auf, Die zweite Verarbeitungsvorrichtung 6 weist indes ein Befestigungswerkzeug 16 zum Befestigen oder Lösen eines den Zerspanungseinsatz haltenden Befestigungsmittels auf. Die Steuerung 8 ist dazu ausgebildet, die erste Verarbeitungsvorrichtung 4 zum Halten des Zerspanungseinsatzes und die zweite Verarbeitungsvorrichtung 6 bei gehaltenem Zerspanungseinsatz zum Befestigen oder Lösen des Befestigungsmittels anzusteuern. Hierdurch kann ein Zerspanungseinsatz mithilfe der beiden Verarbeitungsvorrichtungen 4 und 6 ausgetauscht werden.

Mehrere Zerspanungseinsätze können in einer Lagervorrichtung 18 angeordnet werden, sodass sie bedarfsweise von der ersten Verarbeitungsvorrichtung 4 entnommen werden können. Die Lagervorrichtung 18 weist hierzu mehrere Aufnahmen auf, in die jeweils ein Zerspanungseinsatz einbringbar ist. Dies wird in einer weiter nachfolgenden Figur dargestellt.

Fig. 2 zeigt eine Reihe von unterschiedlichen Handhabungswerkzeugen 20, die bedarfsweise an zumindest einer der Verarbeitungsvorrichtungen 4 und 6 einsetzbar sind, um unterschiedliche Zerspanungseinsätze oder Zerspanungswerkzeuge 12 zu handhaben. Beispielsweise kann die erste Verarbeitungsvorrichtung 4 unterschiedliche Greifelemente 14 aufnehmen, um unterschiedliche Zerspanungseinsätze halten zu können. Die zweite Verarbeitungsvorrichtung 6 kann indes unterschiedliche Befestigungswerkzeuge 16 aufnehmen, um unterschiedliche Befestigungsmittel lösen oder fixieren zu können.

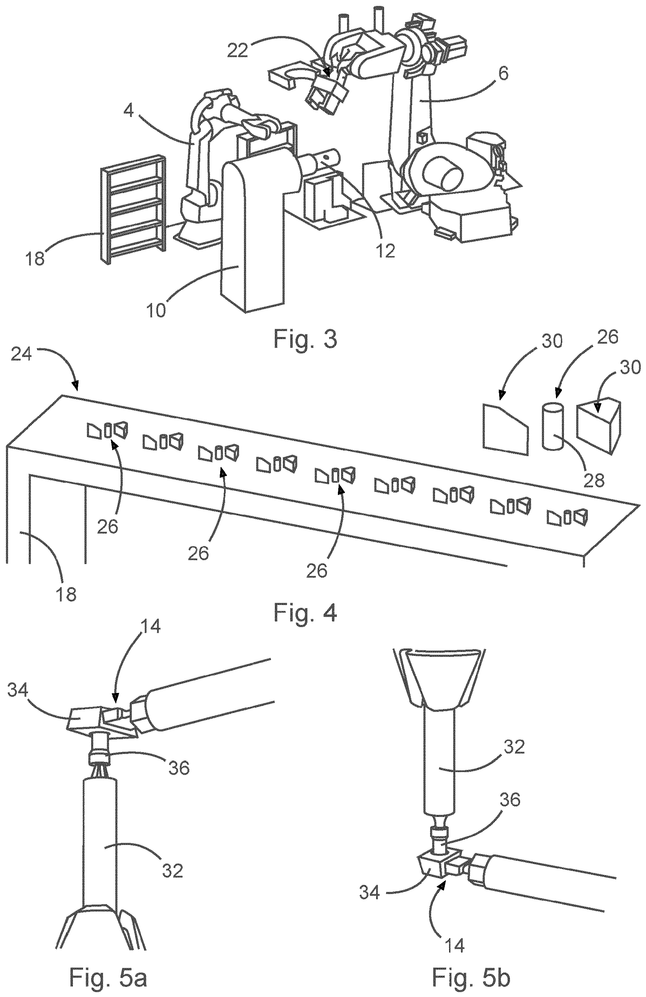

In Fig. 3 wird beispielhaft ein Werkzeugträger-Greifelement 22 an der zweiten Verarbeitungsvorrichtung 6 dargestellt, welches dazu ausgebildet ist, das Zerspanungswerkzeug 12 zu greifen und beispielsweise von einer betreffenden Werkzeugmaschine oder einer Transportvorrichtung, in der mehrere Zerspanungswerkzeuge 12 mit verschlissenen oder bereits ausgetauschten Zerspanungseinsätzen angeordnet sind, in die Fixiervorrichtung 10 zu bewegen oder umgekehrt.

Fig. 4 zeigt ein Detail der Lagervorrichtung 18. An einer Oberseite 24 sind mehrere Aufnahmen 26 angeordnet, die dazu ausgebildet sind, Zerspanungseinsätze nur in einer bestimmten Ausrichtung aufzunehmen bzw. auszurichten. Die Zerspanungseinsätze könnten etwa Wendeschneidplatten sein. Hierzu weisen die Aufnahmen 26 jeweils beispielhaft einen Stift 28 auf, der von zwei Zentrierflanken 30 umgeben ist. Die Zerspanungseinsätze können etwa eine zentrale Bohrung aufweisen, die zur Aufnahme des Befestigungsmittels vorgesehen ist. Mit dieser zentralen Bohrung werden die Zerspanungseinsätze jeweils auf den Stift 28 aufgesetzt und durch Flächenkontakt mit den Zentrierflanken 30 ausgerichtet, sodass sie anschließend bündig auf der Oberseite 24 zwischen den Zentrierflanken 30 in einer genau vordefinierten Ausrichtung aufliegen. Die erste Verarbeitungsvorrichtung 4 kann einen Zerspanungseinsatz anschließend in der vorgegebenen Ausrichtung greifen, um ihn dann anschließend präzise an dem Zerspanungswerkzeug 12 oder der betreffenden Werkzeugmaschine zu positionieren. Eine komplexe Prüfung der momentanen Ausrichtung der Zerspanungseinsätze nach deren Entnahme von der Aufnahme 26 ist folglich nicht notwendig Fig. 5a und 5b zeigen eine Schraubendrehvorrichtung 32, die an der zweiten Verarbeitungsvorrichtung 6 angeordnet sein kann. Das Greifelement 14 der ersten Verarbeitungsvorrichtung 4 ist als Greifsauger ausgebildet und in der gezeigten Darstellung in Flächenkontakt mit einem Zerspanungseinsatz 34, um es unter Ausnutzung eines Vakuums zu halten, während die Schraubendrehvorrichtung 32 ein Befestigungsmittel 36 dreht, um den Zerspanungseinsatz 34 zu lösen oder zu befestigen.

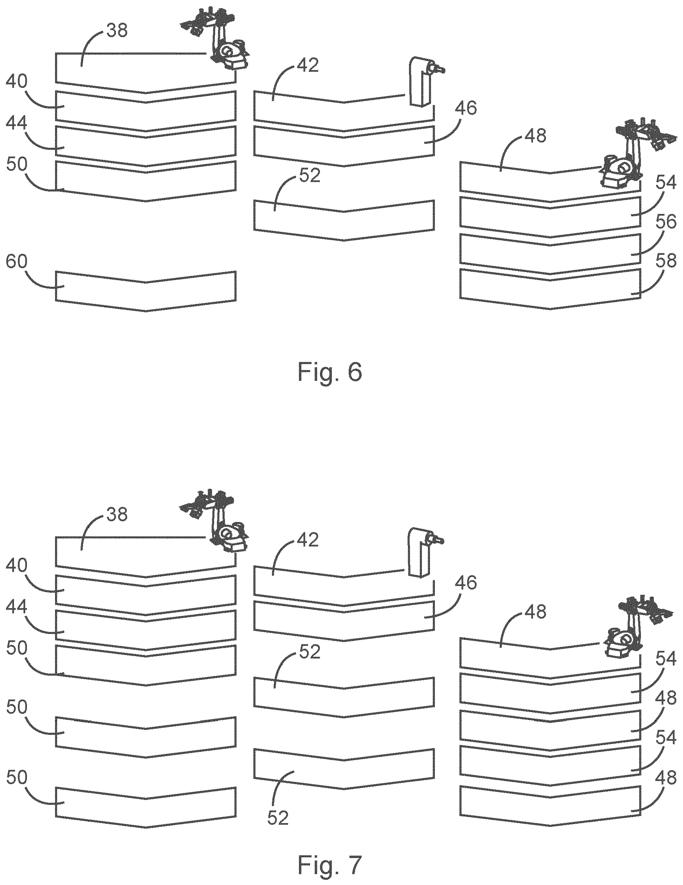

Fig. 6 zeigt eine erste Variante eines Verfahrens zum Einsetzen oder Entnehmen von Zerspanungseinsätzen eines Zerspanungswerkzeugs. Es beginnt beispielhaft mit der Aufnahme 38 eines Zerspanungswerkzeugs 12, beispielsweise aus einer Transportvorrichtung, und der Übergabe 40 an die Fixiervorrichtung 10. Diese nimmt das Zerspanungswerkzeug 12 auf 42. An der zweiten Verarbeitungsvorrichtung 6 könnte das Handhabungswerkzeug gewechselt werden 44, um es anschließend an das Zerspanungswerkzeug 12 heranzufahren. Das Zerspanungswerkzeug 12 könnte durch die Fixiervorrichtung 10 positioniert werden 46, um den betreffenden Zerspanungseinsatz leicht bzw. aus der gewünschten Richtung erreichen zu können. Die erste Verarbeitungsvorrichtung 4 fixiert 48 einen auszutauschenden Zerspanungseinsatz, beispielsweise eine Wendeschneidplatte 34. Wie in Fig. 5a gezeigt kann das Befestigungsmittel 36 gelöst werden 50. Das Zerspanungswerkzeug 12 kann anschließend erneut positioniert werden 52, um die Wendeschneidplatte 34 von der ersten Verarbeitungsvorrichtung 4 abtransportieren zu lassen 54. Eine neue Wendeschneidplatte 34 wird danach antransportiert 56 und fixiert 58, um anschließend befestigt zu werden 60. Das Zerspanungswerkzeug 12 kann beim Lösen 50 so ausgerichtet sein, dass das Befestigungsmittel 36 von unten abgeschraubt wird, während beim Befestigen 60 das Anschrauben von oben durchgeführt wird und die Schwerkraft bei der Positionierung der Wendeschneidplatte 34 unterstützt.

In Fig. 7 wird eine leichte Abwandlung gezeigt, bei der mehrere Zerspanungseinsätze nacheinander ausgetauscht werden. So wird das Zerspanungswerkzeug 12 mehrmals positioniert 52 und mehrere Befestigungsmittel 36 werden nacheinander gelöst 50.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: System
- 4: erste Verarbeitungsvorrichtung
- 6: zweite Verarbeitungsvorrichtung
- 8: Steuerung
- 10: Fixiervorrichtung
- 12: Zerspanungswerkzeug
- 14: Greifelement
- 16: Befestigungswerkzeug
- 18: Lagervorrichtung
- 20: Handhabungswerkzeug
- 22: Werkzeugträger-Greifelement
- 24: Oberseite
- 26: Aufnahme
- 28: Stift
- 30: Zentrierflanke
- 32: Schraubendrehvorrichtung
- 34: Zerspanungseinsatz
- 36: Befestigungsmittel
- 38: Aufnahme
- 40: Übergabe an Fixiervorrichtung
- 42: Aufnehmen des Werkzeugträgers
- 44: Wechseln des Handhabungswerkzeugs
- 46: Positionieren Fixiervorrichtung
- 48: Fixieren der Verarbeitungsvorrichtung
- 50: Lösen des Befestigungsmittels
- 52: Positionieren des Werkzeugträgers
- 54: Abtransportieren Zerspanungseinsatz
- 56: Antransportieren Zerspanungseinsatz
- 58: Fixieren Zerspanungseinsatz
- 60: Befestigen Zerspanungseinsatz

## Patentansprüche

1. System (2) zum Einsetzen oder Entnehmen von Zerspanungseinsätzen (34) eines Zerspanungswerkzeugs (12), aufweisend:
- eine erste Verarbeitungsvorrichtung (4),
- eine zweite Verarbeitungsvorrichtung (6), und
- eine mit der ersten Verarbeitungsvorrichtung (4) und der zweiten Verarbeitungsvorrichtung (6) gekoppelte Steuerung (8),
wobei die erste Verarbeitungsvorrichtung (4) ein Greifelement (14) zum Halten oder Sichern eines Zerspanungseinsatzes (34) aufweist,
wobei die zweite Verarbeitungsvorrichtung (6) ein Befestigungswerkzeug (16) zum Befestigen oder Lösen eines den Zerspanungseinsatz (34) haltenden Befestigungsmittels (36) aufweist, und
wobei die Steuerung dazu ausgebildet ist, die erste Verarbeitungsvorrichtung (4) zum Halten des Zerspanungseinsatzes (34) anzusteuern und die zweite Verarbeitungsvorrichtung (6) bei gehaltenem Zerspanungseinsatz (34) zum Befestigen oder Lösen des Befestigungsmittels (36) anzusteuern,
das System (2) ferner aufweisend eine Lagervorrichtung (18) mit mehreren Aufnahmen (26) zum temporären Lagern von Zerspanungseinsätzen (34), wobei die Lagervorrichtung (18) dazu ausgebildet ist, Zerspanungseinsätze (34) in die Aufnahmen (26) einzuführen und aus ihr zu entnehmen, wobei in jede Aufnahme (26) jeweils ein Zerspanungseinsatz (34) einbringbar ist,
wobei die Aufnahmen (26) jeweils eine Zentriervorrichtung umfassen, die komplementär zu dem Zerspanungseinsatz (34) ausgeformt und dazu ausgebildet ist, den Zerspanungseinsatz (34) in einer vorgegebenen Ausrichtung zu halten.

2. System (2) nach Anspruch 1,
ferner aufweisend eine separate Fixiervorrichtung (10) zur Aufnahme eines Zerspanungswerkzeugs (12), an dem der Zerspanungseinsatz (34) zum Gebrauch anbringbar ist, zum Einsetzen und Entnehmen des Zerspanungseinsatzes (34) bei an der Fixiervorrichtung (10) angeordnetem Zerspanungswerkzeug (12).

3. System (2) nach Anspruch 2,
wobei die Fixiervorrichtung (10) in einem Bereich angeordnet ist, der sich in einen Arbeitsbereich der ersten Verarbeitungsvorrichtung (4) und der zweiten Verarbeitungsvorrichtung (6) befindet.

4. System (2) nach einem der vorhergehenden Ansprüche,
wobei das Greifelement (14) einen Sauggreifer oder einen Klemmgreifer aufweist.

5. System (2) nach einem der vorhergehenden Ansprüche,
wobei das Befestigungswerkzeug (16) eine Schraubendrehvorrichtung aufweist.

6. System (2) nach einem der vorhergehenden Ansprüche,
wobei mindestens eine der ersten Verarbeitungsvorrichtung (4) und der zweiten Verarbeitungsvorrichtung (6) ein Mehrachsroboter ist.

7. System (2) nach einem der vorhergehenden Ansprüche,
wobei mindestens eine der ersten Verarbeitungsvorrichtung (4) und der zweiten Verarbeitungsvorrichtung (6) dazu ausgebildet sind, ein auswechselbares Handhabungswerkzeug (20) zu tragen.

8. System (2) nach Anspruch 7,
wobei die Steuerung (8) dazu ausgebildet ist, beim Handhaben eines Zerspanungseinsatzes (34) eine Kennung des den Zerspanungseinsatz (34) tragenden Zerspanungswerkzeugs (12) einzulesen und die mindestens eine der ersten und zweiten Verarbeitungsvorrichtung (4, 6) so anzusteuern, dass sie ein geeignetes Handhabungswerkzeug (20) aufnehmen.

9. Verfahren zum Einsetzen oder Entnehmen von Zerspanungseinsätzen (34) eines Zerspanungswerkzeugs (12), aufweisend die Schritte:
- Positionieren eines Greifelements (14) einer ersten Verarbeitungsvorrichtung an einem Zerspanungseinsatz (34),
- Halten des Zerspanungseinsatzes (34) durch das Greifelement (14),
- Positionieren eines Befestigungswerkzeugs (16) einer zweiten Verarbeitungsvorrichtung (6) an einem den Zerspanungseinsatz (34) haltenden Befestigungsmittels (36),
- Befestigen oder Lösen des Befestigungsmittels (36) mittels des Befestigungswerkzeugs (16) bei gehaltenem Zerspanungseinsatz, und
- Loslassen des Zerspanungseinsatzes (34) durch die erste Verarbeitungsvorrichtung (4),
ferner aufweisend den Schritt des Einbringens des Zerspanungseinsatzes (34) in eine Aufnahme (26) einer Zentriervorrichtung einer Lagervorrichtung (18), wobei die Zentriervorrichtung komplementär zu dem Zerspanungseinsatz (34) ausgeformt und dazu ausgebildet ist, den Zerspanungseinsatz (34) in einer vorgegebenen Ausrichtung zu halten.

10. Verfahren nach Anspruch 9, ferner aufweisend die Schritte:
- Entnehmen eines den Zerspanungseinsatz (34) tragenden Zerspanungswerkzeugs (12) von der Werkzeugmaschine oder einer Transportvorrichtung,
- Einbringen des Zerspanungswerkzeugs (12) in eine Fixiervorrichtung (10), und
- nach dem Handhaben des Zerspanungseinsatzes (34) bei in der Fixiervorrichtung (10) angeordnetem Zerspanungswerkzeug (12) das Entnehmen des Zerspanungswerkzeugs (12) von der Fixiervorrichtung (10), und
- Einsetzen des Zerspanungswerkzeugs (12) in die Werkzeugmaschine oder die Transportvorrichtung.

11. Verfahren nach Anspruch 9 oder 10,
wobei das Halten das Anlegen eines Unterdrucks an einen Sauggreifer oder das Bewegen von Gliedern eines Klemmgreifers zum Klemmen des Zerspanungseinsatzes (34) umfasst.

12. Verfahren nach einem der Ansprüche 10 bis 12,
wobei das Befestigen oder Lösen das Betätigen einer Schraubendrehvorrichtung (32) an der zweiten Verarbeitungsvorrichtung (6) umfasst.

## Claims

1. A system (2) for inserting or removing machining inserts (34) of a machining tool (12), comprising:
- a first processing device (4),
- a second processing device (6), and
- a controller (8) coupled to the first processing device (4) and the second processing device (6),
wherein the first processing device (4) comprises a gripping element (14) for holding or securing a machining insert (34),
wherein the second processing device (6) comprises a fastening tool (16) for fastening or releasing a fastening means (36) holding the machining insert (34), and
wherein the controller is configured to control the first processing device (4) for holding the machining insert (34) and to control the second processing device (6) for fastening or releasing the fastening means (36) when the machining insert (34) is held,
the system (2) further comprising a storage device (18) with a plurality of receptacles (26) for temporarily storing machining inserts (34), wherein the storage device (18) is configured to insert and remove machining inserts (34) into and from the receptacles (26), wherein a respective machining insert (34) is introducible into each receptacle (26),
wherein the receptacles (26) each comprise a centering device which is shaped complementary to the machining insert (34) and is configured to hold the machining insert (34) in a predetermined orientation.

2. The system (2) according to claim 1,
further comprising a separate fixing device (10) for receiving a machining tool (12) to which the machining insert (34) is attachable for use, for inserting and removing the machining insert (34) when the machining tool (12) is arranged on the fixing device (10).

3. The system (2) according to claim 2,
wherein the fixing device (10) is arranged in an area located in a working area of the first processing device (4) and the second processing device (6).

4. The system (2) according to any one of the preceding claims,
wherein the gripping element (14) comprises a suction gripper or a clamping gripper.

5. The system (2) according to any one of the preceding claims,
wherein the fastening tool (16) comprises a screw turning device.

6. The system (2) according to any one of the preceding claims,
wherein at least one of the first processing device (4) and the second processing device (6) is a multi-axis robot.

7. The system (2) according to any one of the preceding claims,
wherein at least one of the first processing device (4) and the second processing device (6) is configured to carry an exchangeable handling tool (20).

8. The system (2) according to claim 7,
wherein the controller (8) is configured to read in an identifier of the machining tool (12) carrying the machining insert (34) when handling a machining insert (34) and to control the at least one of the first and second processing devices (4, 6) such that it receives a suitable handling tool (20).

9. A method for inserting or removing machining inserts (34) of a machining tool (12), comprising the steps of:
- positioning a gripping element (14) of a first processing device on a machining insert (34),
- holding the machining insert (34) by the gripping element (14),
- positioning a fastening tool (16) of a second processing device (6) on a fastening means (36) holding the machining insert (34),
- fastening or releasing the fastening means (36) by means of the fastening tool (16) when the machining insert is held, and
- releasing the machining insert (34) by the first processing device (4),
further comprising the step of introducing the machining insert (34) into a receptacle (26) of a centering device of a storage device (18), wherein the centering device is shaped complementary to the machining insert (34) and is configured to hold the machining insert (34) in a predetermined orientation.

10. The method according to claim 9, further comprising the steps of:
- removing a machining tool (12) carrying the machining insert (34) from the machine tool or a transport device,
- introducing the machining tool (12) into a fixing device (10), and
- after handling the machining insert (34) when the machining tool (12) is arranged in the fixing device (10), removing the machining tool (12) from the fixing device (10), and
- inserting the machining tool (12) into the machine tool or the transport device.

11. The method according to claim 9 or 10,
wherein the holding comprises applying a negative pressure to a suction gripper or moving members of a clamping gripper for clamping the machining insert (34).

12. The method according to any one of claims 10 to 12,
wherein the fastening or releasing comprises actuating a screw turning device (32) on the second processing device (6).

## Revendications

1. Système (2) pour insérer ou retirer des inserts d'usinage (34) d'un outil d'usinage (12), comprenant :
- un premier dispositif de traitement (4),
- un deuxième dispositif de traitement (6), et
- une commande (8) couplée au premier dispositif de traitement (4) et au deuxième dispositif de traitement (6),
dans lequel le premier dispositif de traitement (4) comprend un élément de préhension (14) pour maintenir ou fixer un insert d'usinage (34),
dans lequel le deuxième dispositif de traitement (6) comprend un outil de fixation (16) pour fixer ou détacher un moyen de fixation (36) maintenant l'insert d'usinage (34), et
dans lequel la commande est configurée pour commander le premier dispositif de traitement (4) pour maintenir l'insert d'usinage (34) et pour commander le deuxième dispositif de traitement (6) pour fixer ou détacher le moyen de fixation (36) lorsque l'insert d'usinage (34) est maintenu,
le système (2) comprenant en outre un dispositif de stockage (18) avec plusieurs logements (26) pour stocker temporairement des inserts d'usinage (34), dans lequel le dispositif de stockage (18) est configuré pour introduire et retirer des inserts d'usinage (34) dans les logements (26), dans lequel un insert d'usinage (34) peut être introduit dans chaque logement (26),
dans lequel les logements (26) comprennent chacun un dispositif de centrage qui est formé de manière complémentaire à l'insert d'usinage (34) et est configuré pour maintenir l'insert d'usinage (34) dans une orientation prédéterminée.

2. Système (2) selon la revendication 1,
comprenant en outre un dispositif de fixation séparé (10) pour recevoir un outil d'usinage (12) sur lequel l'insert d'usinage (34) peut être monté pour l'utilisation, pour insérer et retirer l'insert d'usinage (34) lorsque l'outil d'usinage (12) est disposé sur le dispositif de fixation (10).

3. Système (2) selon la revendication 2,
dans lequel le dispositif de fixation (10) est disposé dans une zone qui se trouve dans une zone de travail du premier dispositif de traitement (4) et du deuxième dispositif de traitement (6).

4. Système (2) selon l'une quelconque des revendications précédentes,
dans lequel l'élément de préhension (14) comprend une pince aspirante ou une pince de serrage.

5. Système (2) selon l'une quelconque des revendications précédentes,
dans lequel l'outil de fixation (16) comprend un dispositif de vissage.

6. Système (2) selon l'une quelconque des revendications précédentes,
dans lequel au moins l'un du premier dispositif de traitement (4) et du deuxième dispositif de traitement (6) est un robot multiaxe.

7. Système (2) selon l'une quelconque des revendications précédentes,
dans lequel au moins l'un du premier dispositif de traitement (4) et du deuxième dispositif de traitement (6) est configuré pour porter un outil de manipulation remplaçable (20).

8. Système (2) selon la revendication 7,
dans lequel la commande (8) est configurée pour lire, lors de la manipulation d'un insert d'usinage (34), un identifiant de l'outil d'usinage (12) portant l'insert d'usinage (34) et pour commander l'au moins un des premier et deuxième dispositifs de traitement (4, 6) de sorte qu'ils reçoivent un outil de manipulation approprié (20).

9. Procédé pour insérer ou retirer des inserts d'usinage (34) d'un outil d'usinage (12), comprenant les étapes consistant à :
- positionner un élément de préhension (14) d'un premier dispositif de traitement sur un insert d'usinage (34),
- maintenir l'insert d'usinage (34) par l'élément de préhension (14),
- positionner un outil de fixation (16) d'un deuxième dispositif de traitement (6) sur un moyen de fixation (36) maintenant l'insert d'usinage (34),
- fixer ou détacher le moyen de fixation (36) au moyen de l'outil de fixation (16) lorsque l'insert d'usinage est maintenu, et
- libérer l'insert d'usinage (34) par le premier dispositif de traitement (4),
comprenant en outre l'étape consistant à introduire l'insert d'usinage (34) dans un logement (26) d'un dispositif de centrage d'un dispositif de stockage (18), dans lequel le dispositif de centrage est formé de manière complémentaire à l'insert d'usinage (34) et est configuré pour maintenir l'insert d'usinage (34) dans une orientation prédéterminée.

10. Procédé selon la revendication 9, comprenant en outre les étapes consistant à :
- retirer un outil d'usinage (12) portant l'insert d'usinage (34) de la machine-outil ou d'un dispositif de transport,
- introduire l'outil d'usinage (12) dans un dispositif de fixation (10), et
- après la manipulation de l'insert d'usinage (34) lorsque l'outil d'usinage (12) est disposé dans le dispositif de fixation (10), retirer l'outil d'usinage (12) du dispositif de fixation (10), et
- insérer l'outil d'usinage (12) dans la machine-outil ou le dispositif de transport.

11. Procédé selon la revendication 9 ou 10,
dans lequel le maintien comprend l'application d'une dépression à une pince aspirante ou le déplacement de membres d'une pince de serrage pour serrer l'insert d'usinage (34).

12. Procédé selon l'une quelconque des revendications 10 à 12,
dans lequel la fixation ou le détachement comprend l'actionnement d'un dispositif de vissage (32) sur le deuxième dispositif de traitement (6).
